# DEMANDE DE BREVET EUROPEEN

(11) **EP 1 146 444 A1**
(43) Date de publication de la demande: **17.10.2001**
(21) Numéro de dépôt: 01460018.3
(22) Date de dépôt: 26.03.2001
(51) Int. Cl.: G06F 17/30

(54) **Procédé et système de fourniture d'un service géo-dépendant, équipement de localisation et équipement d'exploitation correspondants**

(30) Priorité: 14.04.2000 FR 0004883
(71) Demandeur: Inovatel, 38240 Meylan (FR)
(72) Inventeur: Bouthors, Nicolas, 38240 Meylan (FR)
(74) Mandataire: Vidon, Patrice

(57) **Abrégé**

L'invention concerne un procédé de fourniture d'un service géo-dépendant du type permettant à un utilisateur (1) disposant d'un terminal (21, 22) d'accéder, via au moins un réseau de communication, à un service dépendant d'une position géographique, ledit procédé comprenant :
- une phase d'acquisition (23) d'au moins une information de position relative à la position géographique ;
- une phase d'exploitation de l'information de position, de façon à fournir le service géo-dépendant en fonction de l'information de position. Selon l'invention, la phase d'acquisition est mise en oeuvre dans au moins
un équipement de localisation (2) permettant l'acquisition et le stockage, pour l'utilisateur, de l'information de position, et la phase d'exploitation est mise en oeuvre dans au moins un équipement d'exploitation (3), auquel l'équipement de localisation fournit (14) l'information de position.

## Description

Le domaine de l'invention est celui de la gestion des accès d'utilisateurs aux services proposés par un fournisseur.

Plus particulièrement, l'invention concerne la fourniture d'un service géo-dépendant à un utilisateur pouvant accéder, via un terminal, à un réseau de communication.

Les services géo-dépendants sont fournis à un utilisateur relativement à une position géographique donnée. Par exemple, un utilisateur d'un réseau de communication peut avoir accès à des services, relatifs à sa position géographique courante.

Ainsi, un utilisateur en déplacement peut vouloir connaître la liste des hôtels ou des restaurants les plus proches de sa destination finale ou de l'endroit où il se trouve à un instant donné. De manière classique, il peut se procurer ces informations en contactant, par exemple par téléphone, le syndicat d'initiative de la ville où il se rend, ou un fournisseur de services spécialisé dans ce type de renseignements. L'utilisateur doit alors indiquer au fournisseur de services sa position courante, ou sa position finale, selon son choix. Dans ce dessein, il peut, par exemple, communiquer au fournisseur de services un nom de rue, un nom de ville, ou une zone géographique plus large (par exemple, un périmètre de dix kilomètres autour d'une agglomération urbaine, ou le long d'une autoroute déterminée).

Classiquement, le fournisseur de services géo-dépendants dispose d'un serveur assurant l'acquisition et l'exploitation des informations de position, de façon à fournir des services géo-dépendants. En d'autres termes, le fournisseur de services géo-dépendants reçoit une position géographique (celle de l'utilisateur ou toute autre position que ce dernier désigne), et fournit à l'utilisateur le service associé à cette position.

Par ailleurs, le développement des technologies a notablement accru le nombre et le type d'informations, relatives à la position géographique d'un utilisateur d'un réseau de communication, pouvant être communiquées à un fournisseur de services géo-dépendants.

Ainsi, le développement du GPS (en anglais « Global Positioning System ») permet de connaître avec précision la position d'un utilisateur disposant d'un terminal de localisation de type GPS. Il est également devenu possible de localiser un utilisateur d'un réseau de radiocommunication, en identifiant la cellule du réseau, dans laquelle il se trouve.

De nombreuses autres techniques, telles que, par exemple, la triangulation, à partir de données provenant de plusieurs stations de base d'un réseau de radiocommunication auquel l'utilisateur a accès peuvent encore être mises en oeuvre pour localiser un utilisateur.

Un problème auquel sont confrontés les fournisseurs de services géo-dépendants est donc qu'il existe de nombreux modes d'acquisition de l'information de position, et que les services proposés à l'utilisateur doivent être adaptés à ces différents modes.

Un inconvénient des techniques de l'art antérieur est donc notamment que les fournisseurs de services géo-dépendants doivent disposer de serveurs (effectuant l'acquisition et l'exploitation des informations de position), adaptés aux différents modes d'acquisition de la position géographique désignée par l'utilisateur.

Un autre inconvénient des techniques de l'art antérieur est que, réciproquement, lorsque le fournisseur de services ne dispose pas d'un serveur adapté à l'acquisition de la position géographique de l'utilisateur, ce dernier ne peut pas accéder au service géo-dépendant souhaité. Par exemple, si le fournisseur de services peut fournir un service adapté uniquement aux utilisateurs disposant d'un terminal de type GPS, il ne peut pas disposer des moyens de mise en oeuvre d'une triangulation (à partir de données provenant de stations de base du réseau de radiocommunication), et donc il ne peut pas localiser un utilisateur selon cette technique.

Un autre inconvénient des techniques de l'art antérieur est que les informations de position, relatives à la position géographique désignée par l'utilisateur, sont de natures très différentes, selon que la position a été acquise selon l'une ou l'autre des différentes techniques d'acquisition existantes. Pour cette raison, le fournisseur de services géo-dépendants ne fournit généralement qu'un service limité à l'un des modes d'acquisition de la position géographique.

Encore un autre inconvénient des techniques de l'art antérieur est que la précision de la position géographique désignée par l'utilisateur varie fortement selon la technique d'acquisition de l'information de position utilisée. Or, le fournisseur de services géo-dépendants ne tient pas compte de cette précision pour fournir son service.

Encore un autre inconvénient des techniques de l'art antérieur est que la mise en oeuvre de l'acquisition de la position géographique désignée par l'utilisateur nécessite un traitement parfois long et coûteux pour le fournisseur de services géo-dépendants.

L'invention a notamment pour objectif de pallier ces inconvénients de l'art antérieur.

Plus précisément, un objectif de l'invention est de fournir un procédé de fourniture d'un service géo-dépendant, qui soit simple à mettre en oeuvre, et peu coûteux, notamment pour le fournisseur de services.

Un autre objectif de l'invention est de mettre en oeuvre un procédé de fourniture de services géo-dépendants, qui soit adapté à de nombreux modes d'acquisition de la position géographique à laquelle le service doit être associé.

Encore un autre objectif de l'invention est de mettre en oeuvre un procédé de fourniture d'un service géo-dépendant, qui permette à un fournisseur de services de proposer des services identiques aux utilisateurs, quelles que soient les techniques utilisées pour l'acquisition de la position géographique à considérer.

L'invention a encore pour objectif de permettre à un fournisseur de services de fournir un service géo-dépendant à un utilisateur, sans contrôler la méthode utilisée pour acquérir la position géographique désignée par ce dernier.

Encore un objectif de l'invention est de permettre à un utilisateur d'un réseau de communication d'accéder à un service géo-dépendant, relatif à sa position géographique courante, ou à toute autre position géographique de son choix, et notamment à la position géographique d'un autre utilisateur.

Encore un objectif de l'invention est de mettre en oeuvre un procédé de fourniture d'un service géo-dépendant qui tienne compte de la précision avec laquelle la position géographique désignée par un utilisateur a été acquise.

Ces objectifs, ainsi que d'autres qui apparaîtront par la suite sont atteints selon l'invention, à l'aide d'un procédé de fourniture d'un service géo-dépendant du type permettant à un utilisateur disposant d'un terminal d'accéder, via au moins un réseau de communication, à un service dépendant d'une position géographique, ledit procédé comprenant :
- une phase d'acquisition d'au moins une information de position relative à ladite position géographique ;
- une phase d'exploitation de ladite au moins une information de position, de façon à fournir ledit service géo-dépendant en fonction de ladite au moins une information de position.

Selon la présente invention, la phase d'acquisition est mise en oeuvre dans au moins un équipement de localisation permettant l'acquisition et le stockage, pour l'utilisateur, de ladite au moins une information de position, et la phase d'exploitation est mise en oeuvre dans au moins un équipement d'exploitation, auquel ledit équipement de localisation fournit ladite au moins une information de position.

Ainsi, l'invention repose sur une approche tout à fait nouvelle et inventive de la fourniture de services géo-dépendants. En effet, l'invention repose sur une dissociation des phases d'acquisition et d'exploitation de l'information de position, relative à la position géographique à considérer, ces deux phases étant respectivement mises en oeuvre dans un équipement de localisation et dans un équipement d'exploitation. On peut notamment envisager qu'un équipement de localisation fasse l'acquisition d'informations de position destinées à plusieurs équipements d'exploitation distincts. Inversement, un équipement d'exploitation peut recevoir des informations de position, en provenance de plusieurs équipements de localisation distincts.

Selon l'invention, des services géo-dépendants peuvent donc être fournis, par un fournisseur de services, sans que ce dernier ne contrôle la technique d'acquisition de la position géographique désignée par l'utilisateur.

Selon l'invention, un service géo-dépendant peut être fourni à un utilisateur relativement à sa position courante, ou à toute autre position géographique, telle que, par exemple, la position d'un autre utilisateur, ou une position géographique à laquelle l'utilisateur souhaite se rendre. On peut, par exemple, envisager qu'un utilisateur souhaite accéder à un service géo-dépendant pour l'un de ses proches, par exemple pour l'un de ses enfants en déplacement dans une autre région. On peut encore envisager qu'un utilisateur souhaite accéder à un service géo-dépendant relatif à une position géographique éloignée, en vue de la préparation d'un voyage ou d'un déplacement professionnel.

Selon une caractéristique avantageuse de l'invention, la phase d'acquisition permet en outre d'associer au moins une information de précision à ladite au moins une information de position.

En effet, la précision associée à l'information de position varie fortement selon la technique d'acquisition mise en oeuvre. Ainsi, si l'information de position a été acquise selon une technique du type GPS, la précision associée est généralement de l'ordre de la dizaine de mètres. La détermination de la cellule d'un réseau de radiocommunication, dans laquelle se trouve l'utilisateur, ne permet pas, en revanche, de localiser l'utilisateur avec précision au sein de la cellule et l'information de position acquise est donc entachée d'erreur. L'invention permet donc au fournisseur de services de connaître la précision associée à l'information de position, de façon à adapter le service géo-dépendant en fonction de cette information de précision.

Avantageusement, l'équipement de localisation permet l'acquisition d'informations de position selon au moins deux techniques d'acquisition distinctes.

Un tel procédé selon l'invention permet ainsi de satisfaire un grand nombre d'utilisateurs, en mettant en oeuvre plusieurs techniques d'acquisition de l'information de position.

Selon une technique avantageuse, l'équipement de localisation communique à l'équipement d'exploitation ladite au moins une information de position, et éventuellement ladite au moins une information de précision, selon un format standard.

Une telle mise en oeuvre d'un format standard pour les informations échangées entre l'équipement de localisation et l'équipement d'exploitation présente en effet de nombreux avantages. Elle permet notamment au fournisseur de services géo-dépendants de fournir des services identiques à tous les utilisateurs, quelle que soit la technique d'acquisition de l'information de position mise en oeuvre. Elle permet également une simplification de l'équipement d'exploitation, qui doit traiter un unique format de données entrantes.

Avantageusement, le format standard pour ladite au moins une information de position appartient au groupe comprenant :
- un couple de coordonnées géographiques comprenant une donnée de latitude et une donnée de longitude ;
- un couple de coordonnées par rapport à un repère propre audit équipement de localisation.
Par ailleurs, le format standard pour ladite au moins une information de précision définit une zone géographique autour d'une position découlant de ladite au moins une information de position, une telle zone géographique possédant une forme appartenant au groupe comprenant :
- des disques ;
- des polygones ;
- des portions de courbes.

Ainsi, la zone géographique peut être un disque, dans le cas notamment où l'information de précision associée à l'information de position est la même suivant toutes les directions géographiques. On peut aussi envisager que cette zone soit une portion de courbe, notamment dans le cas où l'utilisateur est en déplacement le long d'une route ou d'une trajectoire connue de l'équipement de localisation. Plus généralement, la zone géographique peut être de toute forme, selon l'information de précision associée à l'information de position.

Selon une caractéristique avantageuse de l'invention, lesdites au moins deux techniques d'acquisition distinctes appartiennent au groupe comprenant :
- le GPS (en anglais « Global Positioning System ») ;
- l'E-OTD (en anglais « Enhanced Observed Time Difference ») ;
- l'OTD (en anglais « Observed Time Distance ») ;
- le TDOA (en anglais « Time Difference of Arrival ») ;
- l'AOA (en anglais « Angle of Arrival ») ;
- le TA (en anglais « Time Advance ») ;
- la triangulation à partir de données provenant de stations de base d'un réseau de radiocommunication auquel est relié ledit terminal ;
- la détermination de la ou des cellules d'un réseau de radiocommunication dans laquelle (ou lesquelles) se trouve ledit utilisateur ;
- l'interrogation dudit utilisateur.

Avantageusement, la phase d'acquisition comprend une étape d'acquisition préliminaire de ladite au moins une information de position, et au moins une itération d'une étape de rafraîchissement de ladite au moins une information de position.

Ainsi, l'équipement de localisation peut mettre à jour de manière régulière l'information de position acquise. La mise en oeuvre d'une étape de rafraîchissement est particulièrement avantageuse dans le cas où la position géographique considérée est la position courante d'un utilisateur en déplacement.

Selon une caractéristique avantageuse de l'invention, l'étape de rafraîchissement utilise au moins une technique appartenant au groupe comprenant :
- ledit équipement de localisation communique directement avec ledit utilisateur et/ou ledit terminal ;
- ledit équipement de localisation communique avec un équipement de renseignement dudit au moins un réseau de communication.

On peut, en effet, envisager que la mise à jour de l'information de position soit effectuée après interrogation directe de l'utilisateur, ou par réitération de la phase d'acquisition de l'information de position. On peut encore envisager qu'un équipement de renseignement informe l'équipement de localisation, par exemple sur le mode de déplacement de l'utilisateur.

Selon une technique avantageuse, l'équipement de localisation peut gérer, pour un même utilisateur, au moins deux informations de position, acquises chacune selon une technique d'acquisition spécifique, et l'équipement de localisation peut choisir, selon une stratégie prédéterminée, laquelle desdites au moins deux informations de position communiquer audit équipement d'exploitation.

Ainsi, l'équipement de localisation peut par exemple gérer, pour un même utilisateur, deux informations de position, acquises respectivement selon une technique du type GPS et une triangulation, à partir de données provenant de stations de base d'un réseau de radiocommunication, auquel est relié le terminal de l'utilisateur. Lorsque l'utilisateur est dans son véhicule, équipé du terminal GPS, l'équipement de localisation choisit par exemple l'information de position acquise selon une technique GPS. En revanche, lorsque l'utilisateur est éloigné de son véhicule, l'équipement de localisation choisit par exemple de communiquer à l'équipement d'exploitation l'information de position, moins précise, obtenue à partir de la technique de triangulation.

Selon une variante avantageuse de l'invention, l'équipement de localisation fait l'acquisition d'au moins deux informations de position, chacune éventuellement associée à au moins une information de précision, et l'équipement de localisation et/ou l'équipement d'exploitation dédui(sen)t une information de position utile, éventuellement associée à une information de précision utile, desdites au moins deux informations de position, et éventuellement desdites au moins deux informations de précision associées, ladite information de position utile, et éventuellement ladite information de précision utile associée, étant utilisée(s) pour fournir ledit service géo-dépendant.

Cette variante est particulièrement avantageuse dans le cas où l'information de position est acquise par détermination de la ou des cellule(s) d'un réseau de radiocommunication dans laquelle (ou lesquelles) se trouve l'utilisateur. Il peut en effet se produire que, l'utilisateur se trouvant à la frontière entre deux cellules adjacentes d'un réseau de radiocommunication, l'équipement de localisation fasse l'acquisition de deux informations de position, correspondant respectivement à la position géographique des stations de base de chacune des deux cellules. Il est alors avantageux de déterminer une information de position utile, à partir de ces deux informations de position. Dans l'exemple mentionné ci-dessus, l'information de position utile peut par exemple correspondre au milieu du segment ayant les deux stations de base pour extrémités. Une information de précision utile associée à une telle information de position utile peut par exemple définir une zone géographique couvrant l'ensemble des deux cellules du réseau de radiocommunication.

Selon une première variante avantageuse de l'invention, lorsqu'il souhaite accéder au service géo-dépendant, via le terminal dont il dispose, l'utilisateur émet une requête de service à destination de l'équipement d'exploitation, l'équipement d'exploitation émettant à son tour une requête de localisation, à destination de l'équipement de localisation.

Selon une seconde variante avantageuse de l'invention, lorsqu'il souhaite accéder au service géo-dépendant, via le terminal dont il dispose, l'utilisateur émet une requête de service à destination de l'équipement de localisation, qui la communique à l'équipement d'exploitation, accompagnée de ladite au moins une information de position permettant, à l'équipement d'exploitation, de fournir le service géo-dépendant.

Avantageusement, l'identité de l'utilisateur ayant émis une requête de service est codée préalablement à la réception de ladite requête de service par ledit équipement d'exploitation.

De cette façon, la confidentialité est assurée pour l'utilisateur, dont l'identité n'est pas communiquée à l'équipement d'exploitation.

Selon une technique avantageuse de l'invention, la phase d'acquisition permet en outre d'associer un intervalle de confiance à ladite au moins une information de position, et éventuellement à ladite au moins une information de précision associée.

Un tel intervalle de confiance permet de fournir à l'équipement de localisation et/ou à l'équipement d'exploitation un renseignement sur la probabilité de présence de l'utilisateur, à la position géographique désignée par l'information de position. Cette technique est particulièrement avantageuse lorsque l'équipement de localisation gère plusieurs informations de position pour un même utilisateur.

L'invention concerne également un système de fourniture d'au moins un service géo-dépendant du type permettant à une pluralité d'utilisateurs disposant chacun d'un terminal d'accéder, via au moins un réseau de communication, à au moins un service dépendant d'une position géographique. Selon la présente invention, le système de fourniture permet :
- l'acquisition d'au moins une information de position relative à ladite position géographique ;
- l'exploitation de ladite au moins une information de position, de façon à fournir ledit au moins un service géo-dépendant en fonction de ladite au moins une information de position,
et le système de fourniture comprend :
- au moins un équipement de localisation permettant l'acquisition et le stockage, pour chacun desdits utilisateurs, de ladite au moins une information de position ;
- au moins un équipement d'exploitation auquel ledit au moins un équipement de localisation fournit ladite au moins une information de position pour chacun desdits utilisateurs.

L'invention concerne encore un équipement de localisation du type compris dans un système de fourniture d'au moins un service géo-dépendant permettant à une pluralité d'utilisateurs disposant chacun d'un terminal d'accéder, via au moins un réseau de communication, à au moins un service dépendant d'une position géographique.

Selon la présente invention, l'équipement de localisation comprend :
- des moyens d'acquisition et de stockage, pour chacun desdits utilisateurs d'au moins une information de position relative à ladite position géographique ;
- éventuellement des moyens d'association d'au moins une information de précision à ladite au moins une information de position ;
- des moyens de fourniture de ladite au moins une information de position à au moins un équipement d'exploitation dudit au moins un réseau de communication.

L'invention concerne également un équipement d'exploitation du type compris dans un système de fourniture d'au moins un service géo-dépendant permettant à une pluralité d'utilisateurs disposant chacun d'un terminal d'accéder, via au moins un réseau de communication, à au moins un service dépendant d'une position géographique.

Selon la présente invention, l'équipement d'exploitation comprend des moyens de réception d'au moins une information de position relative à ladite position géographique provenant d'au moins un équipement de localisation, et des moyens d'exploitation de ladite au moins une information de position de façon à fournir ledit au moins un service géo-dépendant en fonction de ladite au moins une information de position.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A et 1B illustrent deux processus pouvant être mis en oeuvre selon l'invention lorsqu'un utilisateur souhaite accéder à un service géo-dépendant ;
- la figure 2 présente un synoptique d'un système de fourniture de services géo-dépendants mettant en oeuvre l'un des processus illustrés dans les figures 1A et 1B.

Le principe général de l'invention repose sur la dissociation, dans le cadre de la fourniture d'un service géo-dépendant à un utilisateur, d'une phase d'acquisition d'une information de position, mise en oeuvre dans un équipement de localisation, et d'une phase d'exploitation de l'information de position, mise en oeuvre dans un équipement d'exploitation, en vue de fournir le service géo-dépendant.

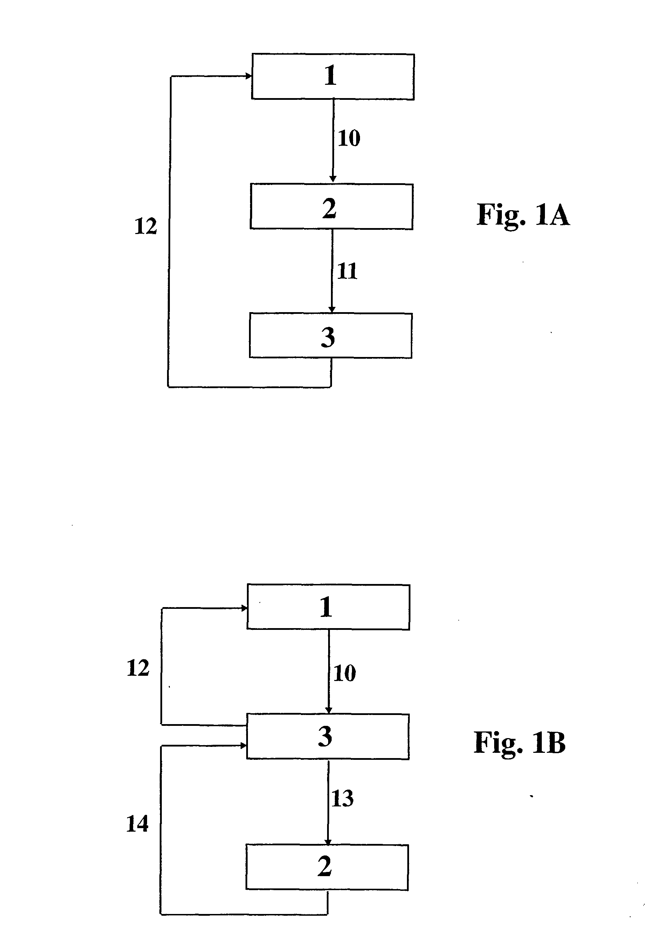

On présente, en relation avec la figure 1, un mode de réalisation de la fourniture d'un service géo-dépendant à un utilisateur d'un réseau de communication, dans lequel un équipement de localisation fournit au moins une information de position à un équipement d'exploitation. L'invention s'applique bien sûr également au cas où un équipement de localisation fournit une ou plusieurs information(s) de position à plusieurs équipements d'exploitation distincts, ou encore au cas où un équipement d'exploitation reçoit des informations de position en provenance de plusieurs équipements de localisation distincts.

Selon une première variante de l'invention, illustrée par la figure 1A, un utilisateur 1 souhaitant accéder à un service géo-dépendant, émet une requête de service 10 à destination d'un équipement de localisation 2. Après acquisition d'au moins une information de position, relative par exemple à la position géographique de l'utilisateur, ou à toute autre position géographique indiquée par l'utilisateur, l'équipement de localisation 2 transmet la requête de service 10, ainsi que l'information de position acquise, à l'équipement d'exploitation 3, au cours d'une étape 11.

Selon une variante de l'invention, l'équipement de localisation 2 transmet également, au cours de l'étape 11, une information de précision associée à l'information de position. Par exemple, l'équipement de localisation 2 envoie l'information de position, accompagnée d'une information de précision, selon un format standard, à l'équipement d'exploitation 3.

Après réception de l'information de position, accompagnée éventuellement d'une information de précision associée, l'équipement d'exploitation fournit à l'utilisateur 1, le service géo-dépendant demandé, au cours d'une étape 12.

Selon une seconde variante de l'invention, illustrée par la figure 1B, un utilisateur 1 souhaitant accéder à un service géo-dépendant, émet une requête de service 10 à destination d'un équipement d'exploitation 3. L'équipement d'exploitation 3 émet à son tour une requête de localisation 13, à destination d'un équipement de localisation 2, afin d'obtenir l'information de position nécessaire à la fourniture du service géo-dépendant demandé par l'utilisateur 1. L'équipement de localisation 2 procède alors à une phase d'acquisition de l'information de position, qu'il transmet à l'équipement d'exploitation 3, éventuellement accompagnée d'une information de précision, au cours d'une étape 14. Après réception de l'information de position, et éventuellement de l'information de précision associée, l'équipement d'exploitation 3 peut fournir à l'utilisateur 1 le service géo-dépendant demandé, au cours d'une étape 12.

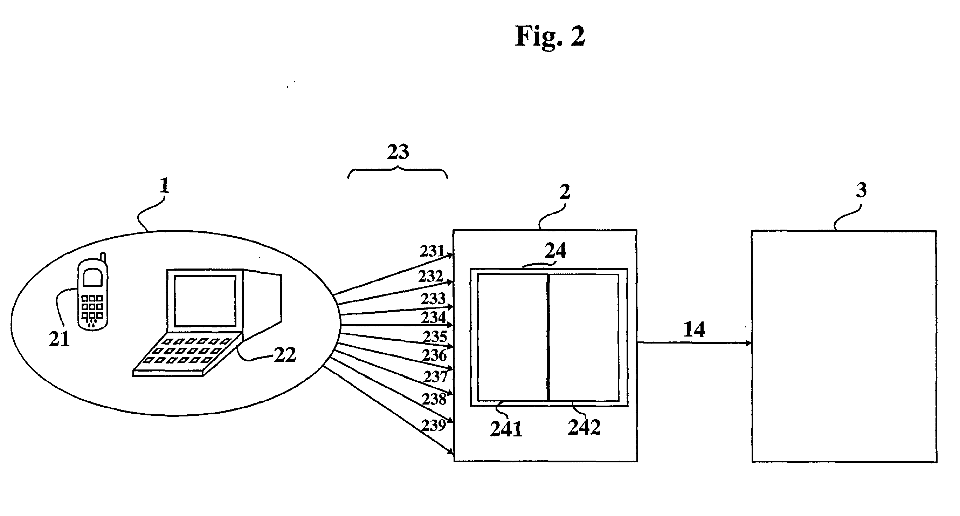

On présente désormais, en relation avec la figure 2, un système de fourniture de services géo-dépendants mettant en oeuvre l'un des processus illustrés dans les figures 1A et 1B.

Un utilisateur 1 accède à un réseau de communication, à l'aide de terminaux de communication 21 et 22. Par exemple, le terminal 21 est un radiotéléphone mobile, qui permet à l'utilisateur d'avoir accès à un réseau de radiocommunication. Le terminal 22 peut être un ordinateur, qui permet à l'utilisateur d'accéder à un réseau de communication du type Internet.

L'utilisateur 1 peut bien sûr disposer de tout type de terminal lui permettant d'accéder à un réseau de communication de quelque nature que ce soit, et notamment un réseau de téléphonie fixe.

Lorsque l'utilisateur 1 souhaite bénéficier d'un service géo-dépendant, il émet une requête de service à destination de l'un quelconque des équipements d'exploitation 3 et de localisation 2, comme illustré par les figures 1A et 1B.

L'équipement de localisation 2 procède alors à une phase d'acquisition 23 d'au moins une information de position relative à une position géographique désignée par l'utilisateur 1. Une telle position géographique peut être la position de l'utilisateur 1 lui-même, ou toute autre position géographique de son choix, comme la position géographique d'un autre utilisateur du réseau de communication par exemple, ou encore une position géographique à laquelle l'utilisateur 1 souhaite se rendre.

La phase d'acquisition 23 met en oeuvre l'une quelconque des techniques d'acquisition référencées 231 à 239. Par exemple, la technique d'acquisition référencée 231 consiste à interroger directement l'utilisateur 1 ; la technique d'acquisition référencée 232 utilise le GPS (en anglais « Global Positioning System ») ; la technique référencée 233 met en oeuvre la triangulation à partir de données provenant de stations de base d'un réseau de radiocommunication, auquel est relié le terminal de l'utilisateur 1. Les techniques référencées 234 à 239 utilisent par exemple l'E-OTD, le TDOA, l'AOA et le TA (en anglais, respectivement « Enhanced Observed Time Difference », « Observed Time Difference », « Time Difference of Arrivai », « Angle of Arrivai », « Time Advance »).

L'équipement de localisation 2 obtient, à l'issue de la phase d'acquisition 23, une information de position, éventuellement associée à une information de précision, et stocke ces données dans une zone de stockage 24.

Selon une variante de l'invention, la zone de stockage 24 est constituée de deux sous-zones de stockage 241 et 242, comprenant respectivement les informations de position et les informations de précision associées.

L'équipement de localisation 2 transmet ensuite, au cours d'une étape 14, l'information de position et l'information de précision associée, selon un format standard, à l'équipement d'exploitation 3.

Par exemple, le format standard comprend un couple de coordonnées, accompagné d'une distance en kilomètres. On peut envisager par exemple que l'équipement de localisation 2 transmette à l'équipement d'exploitation 3 le couple [(40°N, 18°O), 5 km], de manière à indiquer à l'équipement d'exploitation 3 que le service géo-dépendant doit être fourni relativement au point géographique situé à 40° de latitude nord, et à 18° de longitude ouest, cette position géographique étant déterminée avec une précision de cinq kilomètres. Ainsi, l'équipement d'exploitation 3 sait qu'il doit considérer la zone géographique définie par le disque de rayon cinq kilomètres, et de centre le point de coordonnées (40°N, 18°O).

Le format standard peut bien sûr être de tout autre type prédéterminé utilisable par l'équipement d'exploitation 3. On peut ainsi envisager que l'information de position soit exprimée sous la forme d'un couple de coordonnées par rapport à un repère propre à l'équipement de localisation 2.

De la même façon, l'information de précision peut définir une zone géographique de forme polygonale, ou une portion de courbe. Ce dernier format est particulièrement adapté au cas où l'utilisateur 1 du réseau de communication est en déplacement le long d'une route ou d'une autoroute connue de l'équipement de localisation 2.

Après réception de l'information de position, éventuellement associée à une information de précision, selon un format standard, l'équipement d'exploitation 3 peut alors fournir à l'utilisateur 1 le service géo-dépendant requis, et relatif à la position géographique identifiée par l'équipement de localisation 2 au cours de la phase 23.

## Revendications

1. Procédé de fourniture d'un service géo-dépendant du type permettant à un utilisateur (1) disposant d'un terminal (21, 22) d'accéder, via au moins un réseau de communication, à un service dépendant d'une position géographique, ledit procédé comprenant :
- une phase d'acquisition (23) d'au moins une information de position relative à ladite position géographique ;
- une phase d'exploitation de ladite au moins une information de position, de façon à fournir ledit service géo-dépendant en fonction de ladite au moins une information de position,
**caractérisé en ce que** ladite phase d'acquisition est mise en oeuvre dans au moins un équipement de localisation (2) permettant l'acquisition et le stockage, pour ledit utilisateur, de ladite au moins une information de position,
et **en ce que** ladite phase d'exploitation est mise en oeuvre dans au moins un équipement d'exploitation (3), auquel ledit équipement de localisation fournit ladite au moins une information de position.

2. Procédé selon la revendication 1, **caractérisé en ce que** ladite phase d'acquisition permet en outre d'associer au moins une information de précision à ladite au moins une information de position.

3. Procédé selon l'une quelconque des revendications 1 et 2, **caractérisé en ce que** ledit équipement de localisation permet l'acquisition d'informations de position selon au moins deux techniques d'acquisition (231 à 239) distinctes.

4. Procédé selon l'une quelconque des revendications 1 à 3, **caractérisé en ce que** ledit équipement de localisation (2) communique audit équipement d'exploitation (3) ladite au moins une information de position, et éventuellement ladite au moins une information de précision, selon un format standard.

5. Procédé selon la revendication 4, **caractérisé en ce que** ledit format standard pour ladite au moins une information de position appartient au groupe comprenant :
- un couple de coordonnées géographiques comprenant une donnée de latitude et une donnée de longitude ;
- un couple de coordonnées par rapport à un repère propre audit équipement de localisation ;
et **en ce que** ledit format standard pour ladite au moins une information de précision définit une zone géographique autour d'une position découlant de ladite au moins une information de position, ladite zone géographique possédant une forme appartenant au groupe comprenant :
- des disques ;
- des polygones ;
- des portions de courbes.

6. Procédé selon l'une quelconque des revendications 3 à 5, **caractérisé en ce que** lesdites au moins deux techniques d'acquisition distinctes (231 à 239) appartiennent au groupe comprenant :
- le GPS (en anglais « Global Positioning System ») ;
- l'E-OTD (en anglais « Enhanced Observed Time Difference ») ;
- l'OTD (en anglais « Observed Time Distance ») ;
- le TDOA (en anglais « Time Difference of Arrival ») ;
- l'AOA (en anglais « Angle of Arrival »);
- le TA (en anglais « Time Advance ») ;
- la triangulation à partir de données provenant de stations de base d'un réseau de radiocommunication auquel est relié ledit terminal ;
- la détermination de la ou des cellules d'un réseau de radiocommunication dans laquelle (ou lesquelles) se trouve ledit utilisateur ;
- l'interrogation dudit utilisateur.

7. Procédé selon l'une quelconque des revendications 1 à 6, **caractérisé en ce que** ladite phase d'acquisition (23) comprend une étape d'acquisition préliminaire de ladite au moins une information de position, et au moins une itération d'une étape de rafraîchissement de ladite au moins une information de position.

8. Procédé selon la revendication 7, **caractérisé en ce que** ladite étape de rafraîchissement utilise au moins une technique appartenant au groupe comprenant :
- ledit équipement de localisation (2) communique directement avec ledit utilisateur (1) et/ou ledit terminal (21, 22) ;
- ledit équipement de localisation (2) communique avec un équipement de renseignement dudit au moins un réseau de communication.

9. Procédé selon l'une quelconque des revendications 3 à 8, **caractérisé en ce que** ledit équipement de localisation (2) peut gérer, pour un même utilisateur, au moins deux informations de position, acquises chacune selon une technique d'acquisition spécifique (231 à 239), et **en ce que** ledit équipement de localisation (2) peut choisir, selon une stratégie prédéterminée, laquelle desdites au moins deux informations de position communiquer audit équipement d'exploitation.

10. Procédé selon l'une quelconque des revendications 2 à 9, **caractérisé en ce que** ledit équipement de localisation (2) fait l'acquisition d'au moins deux informations de position, chacune éventuellement associée à au moins une information de précision,
et **en ce que** ledit équipement de localisation (2) et/ou ledit équipement d'exploitation (3) dédui(sen)t une information de position utile, éventuellement associée à une information de précision utile, desdites au moins deux informations de position, et éventuellement desdites au moins deux informations de précision associées, ladite information de position utile, et éventuellement ladite information de précision utile associée, étant utilisée(s) pour fournir ledit service géo-dépendant.

11. Procédé selon l'une quelconque des revendications 1 à 10, **caractérisé en ce que**, lorsqu'il souhaite accéder audit service géo-dépendant, via ledit terminal (21, 22) dont il dispose, ledit utilisateur (1) émet une requête de service (10) à destination dudit équipement d'exploitation (3), ledit équipement d'exploitation émettant à son tour une requête de localisation (13), à destination dudit équipement de localisation (2).

12. Procédé selon l'une quelconque des revendications 1 à 10, **caractérisé en ce que**, lorsqu'il souhaite accéder audit service géo-dépendant, via ledit terminal (21, 22) dont il dispose, ledit utilisateur (1) émet une requête de service (10) à destination dudit équipement de localisation (2), qui la communique audit équipement d'exploitation (3), accompagnée de ladite au moins une information de position permettant, audit équipement d'exploitation, de fournir ledit service géo-dépendant.

13. Procédé selon l'une quelconque des revendications 11 et 12, **caractérisé en ce que** l'identité de l'utilisateur (1) ayant émis une requête de service est codée préalablement à la réception de ladite requête de service par ledit équipement d'exploitation (3).

14. Procédé selon l'une quelconque des revendications 2 à 13, **caractérisé en ce que** ladite phase d'acquisition (23) permet en outre d'associer un intervalle de confiance à ladite au moins une information de position, et éventuellement à ladite au moins une information de précision associée.

15. Système de fourniture d'au moins un service géo-dépendant du type permettant à une pluralité d'utilisateurs (1) disposant chacun d'un terminal d'accéder, via au moins un réseau de communication, à au moins un service dépendant d'une position géographique, ledit système permettant :
- l'acquisition d'au moins une information de position relative à ladite position géographique ;
- l'exploitation de ladite au moins une information de position, de façon à fournir ledit au moins un service géo-dépendant en fonction de ladite au moins une information de position,
**caractérisé en ce que** ledit système comprend :
- au moins un équipement de localisation (2) permettant l'acquisition et le stockage, pour chacun desdits utilisateurs (1), de ladite au moins une information de position ;
- au moins un équipement d'exploitation (3) auquel ledit au moins un équipement de localisation (2) fournit ladite au moins une information de position pour chacun desdits utilisateurs (1).

16. Équipement de localisation (2) du type compris dans un système de fourniture d'au moins un service géo-dépendant permettant à une pluralité d'utilisateurs (1) disposant chacun d'un terminal (21, 22) d'accéder, via au moins un réseau de communication, à au moins un service dépendant d'une position géographique,
**caractérisé en ce qu'**il comprend :
- des moyens d'acquisition et de stockage, pour chacun desdits utilisateurs d'au moins une information de position relative à ladite position géographique ;
- éventuellement des moyens d'association d'au moins une information de précision à ladite au moins une information de position ;
- des moyens de fourniture de ladite au moins une information de position à au moins un équipement d'exploitation (3) dudit au moins un réseau de communication.

17. Équipement d'exploitation (3) du type compris dans un système de fourniture d'au moins un service géo-dépendant permettant à une pluralité d'utilisateurs (1) disposant chacun d'un terminal (21, 22) d'accéder, via au moins un réseau de communication, à au moins un service dépendant d'une position géographique,
**caractérisé en ce qu'**il comprend des moyens de réception d'au moins une information de position relative à ladite position géographique en provenance d'au moins un équipement de localisation (2), et des moyens d'exploitation de ladite au moins une information de position de façon à fournir ledit au moins un service géo-dépendant en fonction de ladite au moins une information de position.
